(19) Europäisches Patentamt
European Patent Office
Office européen des brevets

(11) EP 1 808 989 A1

(12) **EUROPÄISCHE PATENTANMELDUNG**

(43) Veröffentlichungstag:
18.07.2007 Patentblatt 2007/29

(51) Int Cl.:
*H04L 27/26* (2006.01)  *H04B 7/04* (2006.01)

(21) Anmeldenummer: 06000638.4

(22) Anmeldetag: **12.01.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder:
• **SIEMENS AKTIENGESELLSCHAFT**
**80333 München (DE)**
• **Fraunhofer-Gesellschaft zur Förderung der angewandten Forschung e.V.**
**80686 München (DE)**

(72) Erfinder:
• **Halfmann, Rüdiger**
**67697 Otterberg (DE)**
• **Jorswieck, Eduard**
**15566 Schöneiche (DE)**
• **Schulz, Egon, Dr.**
**80993 München (DE)**
• **Weckerle, Martin, Dr.**
**89077 Ulm (DE)**

(54) **Verfahren zur digitalen drahtlosen Nachrichtenübertragung über einen breitbandigen Mobilfunkkanal**

(57) Verfahren zur digitalen drahtlosen Nachrichtenübertragung über einen breitbandigen Mobilfunkkanal unter Einsatz eines OFDM-Mehrträger-Modulationsverfahrens mit M Unterträgern in einem Frequenzabschnitt des Mobilfunkkanals und mehreren Symbolen in einem Zeitabschnitt sowie unter Einsatz eines MIMO-Mehrantennenverfahrens mit T Sendeantennen und R Empfangsantennen, wobei für alle Unterträger und Symbole eine einzige vorbestimmte, kanalangepasste Sendestrategie verwendet wird, die unabhängig von der Spezifik des MIMO-Mehrantennenverfahrens und unabhängig von der Größe des Frequenz-/Zeitabschnitts signalisierungsseitig durch maximal T*R komplexe Werte beschrieben wird.

# FIG 1

1. Initialize for all users $1 \leq k \leq K$ the covariance matrices $Q_k^1 = ... = Q_k^N = I$.
   while step-improvement is larger than some small constant do

3. From last step given covariance matrices $Q_k^1, ..., Q_k^N$ for all $1 \leq k \leq K$.

4. Solve for all users $1 \leq k \leq K$ the power allocation optimization:

$$p_k^1, ..., p_k^N = \arg\max_{p_1,...p_K} \sum_{k=1}^{K} q_k \sum_{n=1}^{N} \log \det(I + \rho \sum_{k=1}^{K} p_k^n H_k^n Q_k^n H_k^{n,H})$$

$$\text{subject to } \sum_{n=1}^{N} p_k^n \leq P_k \text{ and } p_k^n \geq 0.$$

5. With fixed power allocation $p_k^1, ..., p_k^N$ solve the covariance matrix optimization

$$Q_1^n, ..., Q_K^n = \arg\max_{Q_1^n,...,Q_K^n} \log \det(I + \rho \sum_{k=1}^{K} p_k^n H_k^n Q_k^n H_k^{n,H})$$

$$\text{subject to } Q_k^n \succeq 0 \text{ and } tr(Q_k^n) = 1 \text{ using iterative single-user chunk processing (MAXDET).}$$

end while

**Beschreibung**

Die Erfindung betrifft ein Verfahren zur digitalen drahtlosen Nachrichtenübertragung über einen breitbandigen Mobilfunkkanal nach dem Oberbegriff des Anspruchs 1.

Eine digitale drahtlose Datenübertragung über einen breitbandigen Mobilfunkkanal lässt sich unter Verwendung des Modulationsverfahrens OFDM (Orthogonal Frequency Division Multiplexing) adaptiv und flexibel gestalten und aufwandsgünstig mit Mehrantennenverfahren (MIMO-Verfahren) kombinieren. Eine allgemeine Erläuterung zu Mehrträgerverfahren und speziell zum OFDM-Verfahren findet sich beispielsweise in http://nt.eit.uni-kl.de/forschung/ofdm.html.

Generell lässt sich die räumliche Signalverarbeitung für das Anwenden von MIMO-Verfahren individuell pro Unterträger eines Mehrträgermodulationsverfahrens durchführen. Man kann somit die MIMO-OFDM-Übertragung als parallele Realisierung mehrerer MIMO-Einträgermodulationsverfahren interpretieren. Somit lässt sich im Prinzip für jeden individuellen Unterträger ein anderes MIMO-Verfahren heranziehen.

Bei den existierenden MIMO-Verfahren unterscheidet man grundsätzlich die folgenden vier Kategorien:

a) nicht kanalorientiert
b) senderorientiert
c) empfängerorientiert
d) kanalorientiert

Zur Kategorie a) gehören die Diversitätsverfahren, die ohne jegliche Kanalinformation auskommen und die, ohne sich an den Kanal anzupassen, nur die räumliche Diversität der Übertragung ausnutzen und auch nur einen Datenstrom gleichzeitig im Raumbereich übertragen können.

Im Fall b) wird auf der Empfangsseite Kanalinformation ermittelt und unter Berücksichtigung der sendeseitigen Signalverarbeitung eine Entzerrung sowie ggf. eine räumliche Signalseparierung durchgeführt. Diese Vorgehensweise entspricht der Entzerrung und Separierung des klassischen MIMO-Ansatzes, bei dem senderseitig ein räumliches Multiplexing ohne Ausnutzen der Kanalinformation durchgeführt.

Die Kategorie c) entspricht weitgehend der Variante b), wobei die Kanalinformation sendeseitig zu einer Vorverzerrung genutzt wird. Am Empfänger wird nun keine Kanalinformation berücksichtigt (z.B. Joint Transmission).

Im Fall d) wird die sendeseitige und die empfangsseitige Signalverarbeitung jeweils an die momentane vollständige Kanalinformation oder an eine statistische, den Kanal beschreibende Größe (z.B. räumliche Kovarianzmatrix) angepasst. Kanalorientierte Verfahren haben den Vorteil, dass man bereits sendeseitig die Zahl der parallel im Raumbereich zu übertragenden Datenströme gezielt, abhängig von der Kanalqualität, anpassen kann. Dies schließt auch den Fall ein, dass nur ein Datenstrom übertragen wird (z.B. Beamforming).

Kanalorientierte MIMO-Verfahren haben das größte Kapazitätssteigerungspotential, weil sie sowohl eine sendeseitige als auch empfangsseitige Anpassung der Signalverarbeitung an den Kanal ermöglichen und dabei den Kanal räumlich so diagonalisieren, dass mehrere unterschiedliche räumliche Übertragungsmodi entstehen. Hierzu muss jedoch die Kanalinformation am Sender vorhanden sein, um die optimale Sendestrategie auswählen bzw. einstellen zu können. Bei TDD-basierten Verfahren kann die Kanalinformation, die zum Senden benötigt wird, während der Empfangsphase ermittelt werden, da Reziprozität des Kanals angenommen werden kann. Bei FDD-basierten Verfahren ist dies nicht unmittelbar möglich. Hier muss die Kanalinformation am Empfänger ermittelt und zum Sender zurücksignalisiert werden.

Da die vollständige Kanalinformation die gesamte Information über die breitbandigen Kanäle zwischen allen Sende- und Empfangsantennen umfasst, erfordert das Rücksignalisieren einen erheblichen Ressourcenbedarf mit nicht unwesentlichem Signalisierungsaufwand. Bei einer MIMO-OFDM-Übertragung mit N Unterträgern, T Sendeantennen und R Empfangsantennen müssen $N^*T^*R$ komplexwertige Kanalkoeffizienten vom Empfänger zum Sender zurücksignalisiert werden, wenn die Kanalinformation im Frequenzbereich bereitgestellt wird.

Im Allgemeinen und bei richtiger Dimensionierung des OFDM-Signals lässt sich die Kanalimpulsantwort im Zeitbereich mit W <= N Kanalkoeffizienten darstellen, wobei W die Anzahl der zur Beschreibung des Kanals im Zeitbereich erforderlichen Kanalkoeffizienten, d.h. Kanal-Taps, angibt. Sehr häufig gilt sogar W << N. In diesem Fall wird die Kanalinformation in den Zeitbereich transferiert, und es müssen nur W*T*R < N*T*R Kanalkoeffizienten zurücksignalisiert werden. Dabei stellt sich jedoch zusätzlich das Problem, die Anzahl der tatsächlich für die momentane Kanalbeschreibung benötigten Koeffizienten W zu ermitteln.

Ein Kanalkoeffizient kann durch eine komplexe Zahl beschrieben werden. Die W*T*R Kanalkoeffizienten werden im Allgemeinen individuell für jeden Teilnehmer einmal pro Rahmendauer übertragen. Breitbandige Systeme können geringe Laufzeitunterschiede verschiedener Ausbreitungspfade unterscheiden, wenn die reziproke Bandbreite kleiner ist als der Laufzeitunterschied der Pfade. Somit kann im Allgemeinen davon ausgegangen werden, dass mit der Kanalbandbreite auch die Anzahl W an Kanalkoeffizienten, die den Breitbandkanal beschreiben, steigt. Unabhängig von der Wahl eines Ein- oder Mehrträgermodulationsverfahrens (wie OFDM) müssen somit bei einem System der Bandbreite B, dessen Kanal über dieser gesamten Bandbreite durch W Koeffizienten beschrieben werden kann, pro Teilnehmer und pro Rahmen mindestens W*T*R Werte übertragen werden.

Um die Komplexität und den Signalisierungsaufwand gering zu halten, verwendet man im Allgemeinen nur ein MIMO-Verfahren für alle Unterträger des OFDM-Signals. Bei Verfahren, die die Kanalinformation am Sender ausnutzen, wird jedoch stets die volle momentane oder zeitlich gemittelte bzw. statistische Kanalinformation zur Ermittlung der für jeden der N Unterträger individuellen Sendestrategien herangezogen.

Ein Vertreter der Verfahren, die die volle instantane Kanalkenntnis am Sender ausnutzen, ist das SVD-MIMO-Verfahren (Singular Value Decomposition MIMO). Zeitlich gemittelte Kanalinformation in Form der räumlichen Kanalkovarianzmatrix wird bei Eigenbeamforming, wenn mehrere räumliche Datenströme parallel übertragen werden, oder bei MRC-Beamforming (Maximum Ratio Combining Beamforming), wenn nur ein räumlicher Datenstrom übertragen wird, verwendet.

Die Sendestrategie pro OFDM-Unterträger wird bei Verfahren, die mehrere räumliche Datenströme parallel übertragen, durch eine Matrix beschrieben, deren Dimension T*R entspricht. Dabei wird davon ausgegangen, dass das OFDM-System so dimensioniert ist, dass jeder Unterträger ein sogenanntes "flat fading" erfährt. Dies bedeutet, dass die Bandbreite viel geringer ist als die reziproke zeitliche Kanaldispersion, so dass für jeden Unterträgerkanal im Fall einer Antenne die Beschreibung durch nur einen einzigen komplexen Kanalkoeffizienten möglich ist. Bei Verfahren, die nur einen Datenstrom übertragen, ist die Sendestrategie pro Unterträger durch einen Vektor der Dimension T vollständig beschrieben.

Dabei ergeben sich die folgenden Möglichkeiten:

1. Die volle Kanalinformation wird im Frequenzbereich zurücksignalisiert, z.B. bei SVD-MIMO werden $N^*T^*R$ Werte oder bei kanalorientiertem Beamforming N*T Werte übertragen. Im ersten Fall können dabei bis zu T parallele Datenströme über unterschiedliche räumliche Modi übertragen werden. Im zweiten Fall kann nur ein Datenstrom gleichzeitig im Raumbereich übertragen werden. Diese Vorgehensweise ist auch für Einträgermodulationsverfahren mit Frequenzbereichsentzerrung möglich.

2. Die volle Kanalinformation wird im Zeitbereich zurücksignalisiert. Dabei werden zusätzlich Verfahren angewandt, die das Schätzen der aktuellen Anzahl der zur Kanalbeschreibung erforderlichen Kanalkoeffizienten W erlauben. Derartige Verfahren transformieren die Kanalübertragungsfunktion vom Frequenzbereich in den Zeitbereich und ordnen beispielsweise die so im Zeitbereich erhaltenen N Werte nach ihren Amplitudenwerten.
Tritt dabei eine Vielzahl etwa gleicher kleinster Amplitudenwerte auf, so geht man davon aus, dass diese Werte nicht zur Beschreibung des Kanals beitragen, sondern Rauschen beschreiben. Durch das Festlegen einer entsprechenden Schwelle können diese Rauschwerte weggelassen werden. Zum Ermitteln der Schwelle kann auch zusätzlich ein zu erwartender SNR-Wert herangezogen werden, falls dieser bekannt ist. Die verbleibende Anzahl W < N an Werten entspricht der Schätzung der aktuell für die Kanalbeschreibung erforderlichen Werte. Vor der weiteren Verwendung der Kanalkoeffizienten müssen diese wieder in ihre ursprüngliche Reihenfolge gebracht werden.
Dieses Schätzverfahren birgt das Risiko, dass die Anzahl W falsch ermittelt wird. Zudem muss dem Empfänger der Signalisierungsinformation in irgendeiner Form deutlich gemacht werden, von welchem Wert W aktuell ausgegangen wird, z.B. nach der Übertragung der W*R*T Werte durch eine zusätzliche Information, dass die Signalisierung der MIMO-Koeffizienten beendet ist.
Um dieses Problem zu umgehen, wird in praxi meist die Variante 1 angewandt, wobei man von einem maximal möglichen W=N ausgeht. Generell ist diese Vorgehensweise auch für Einträgermodulationsverfahren mit Frequenzbereichsentzerrung oder Zeitbereichsentzerrung möglich. Im letzten Fall entfällt die Transformation der Übertragungsfunktion vom Frequenzbereich in den Zeitbereich.

3. Es werden nur von Zeit zu Zeit räumliche Kovarianzmatrizen oder der räumliche, über der Zeit gemittelte Wert des Kanals für Eigenbeamforming oder MRC-Beamforming zurücksignalisiert. Diese Variante ist insofern vorteilhaft, als sie nur sehr geringen mittleren Signalisierungsaufwand erfordert, sie ermöglicht jedoch keine instantane Kanalanpassung. Wird zudem zwischen MIMO-Verfahren gewechselt, so muss dies dem jeweiligen Sender zusätzlich mitgeteilt werden.

Der Erfindung liegt daher die Aufgabe zugrunde, ein verbessertes Verfahren der gattungsgemäßen Art bereitzustellen, welches die Möglichkeit einer Verknüpfung hoher Übertragungskapazität und relativ geringen Signalisierungsaufwandes bietet.

Diese Aufgabe wird durch ein Verfahren mit den Merkmalen des Anspruchs 1 gelöst. Zweckmäßige Fortbildungen des Erfindungsgedankens sind Gegenstand der abhängigen Ansprüche.

Die im folgenden genauer beschriebene Erfindung schließt den wesentlichen Gedanken ein, dass für einen definierten Frequenz- und Zeitabschnitt (wobei der Frequenzabschnitt mehrere Unterträger des OFDM-Signals umfassen kann und der Zeitabschnitt mehrere OFDM-Symbole umfassen kann) nur eine einzige, für alle Unterträger und Symbole des Abschnitts gemeinsame räumliche, an den momentanen Kanal angepasste Sendestrategie verwendet wird. Weiter schließt die Erfindung den Gedanken ein, dass entweder diese Sendestrategie oder die Kanalinformation, von der die Sendestrategie abgeleitet werden kann, sich unabhängig von der Größe des Frequenz-Zeitabschnitts (auch "Chunk" genannt) und unabhängig von dem zu wählenden MIMO-Verfahren, durch maximal T*R komplexe Werte beschreiben lässt.

Wird die Sendestrategie am Sender aus der vom Empfänger zurücksignalisierten Kanalinformation gewonnen, so bestehen hinsichtlich des Signalisierungsaufwands die folgenden beiden Möglichkeiten:

a) Es wird die volle Kanalinformation vom Empfänger zum Sender übertragen, wobei T*R komplexe Werte zurücksignalisiert werden.

b) Es wird abhängig vom Rang der Kanalmatrix rang(H) eine reduzierte Kanalinformation zurücksignalisiert, die rang(H)*T komplexe Werte umfasst.

Wird am Empfänger bereits die Sendestrategie berechnet und diese anstelle der Kanalinformation zurücksignalisiert, so müssen in vorteilhafter Weise nur rang(H)*T reelle Koeffizienten übermittelt werden, da die die Sendestrategie beschreibende Matrix hermitisch ist. Dies bedeutet für die Extremfälle rang(H)=1, dass ein normierter Vektor mit T reellen Phasenwerten übertragen wird (Beamforming), sowie für den Fall maximaler Rang, d.h. rang(H)=T, dass T^2 reelle Koeffizienten übertragen werden.

Somit ist auch nur eine Rücksignalisierung dieser Anzahl von Werten vom Empfänger zum Sender erforderlich ohne eine zusätzliche Mitteilung über die Wahl des MIMO-Verfahrens. Gleichzeitig kann dafür Sorge getragen werden, dass die gemeinschaftliche Sendestrategie bezüglich des Chunks, genauer gesagt, bezüglich des tatsächlichen Kanals über dem Chunk, so ausgewählt wird, dass die Übertragungskapazität über dem Chunk maximiert wird.

Die Größe des Frequenz-Zeit-Abschnitts kann, gemäß einer weiteren bevorzugten Ausgestaltung des erfindungsgemäßen Verfahrens, kanalabhängig in zuvor festgelegten Schritten variiert werden. Ist dies der Fall, muss jeweils zusätzlich zu den die Sendestrategie beschreibenden Werten ein reeller Wert zurücksignalisiert werden.

Gemäß einer weiteren vorteilhaften Fortbildung des Verfahrens kann die Chunkbreite abhängig von den Kanaleigenschaften sowie abhängig von der erforderlichen Kapazität variiert werden. Ist der Kapazitätsbedarf gering, kann die Chunkbreite über der Frequenz trotz eines stark frequenzselektiven Kanals groß gewählt werden, um den Signalisierungsaufwand gering zu halten.

Die Chunkbreite wird, gemäß einer weiteren bevorzugten Verfahrensführung, entweder an die mittleren Kanaleigenschaften, d.h. Kohärenzbandbreite und Kohärenzzeit, angepasst, oder sie wird anhand der Kurzzeitstatistik berechnet, so dass eine erforderliche Übertragungskapazität eingehalten wird.

Die reellen Koeffizienten können analog oder digitalisiert zurücksignalisiert werden. Um bei digitalisierter Übertragung eine herstellerunabhängige Implementierung zu ermöglichen, ist eine bitexakte Beschreibung der zu übertragenden Werte erforderlich, die in einem Standard festgeschrieben werden muss.

In einer weiteren bevorzugten Verfahrensführung, die den mittleren Signalisierungsaufwand weiter senkt, erfolgt die Signalisierung nicht in regelmäßigen Abständen. Je nach zeitlicher Veränderung des Kanals kann vereinbart werden, dass nur dann eine neue Sendestrategie zurücksignalisiert wird, wenn sich der Kanal, d.h. insbesondere die räumlichen Ausbreitungsbedingungen, geändert haben. Somit kann insgesamt der Signalisierungsaufwand bedarfsabhängig variiert werden. Zudem kann das Verfahren auch zur Reduzierung des Signalisierungsaufwands bei MIMO-Konzepten eingesetzt werden, die statistische Kanalinformationen, z.B. in Form von räumlichen Kovarianzmatrizen oder räumlichen, über der Zeit gemittelten Kanalwerten für Eigenbeamforming oder MRC-Beamforming beim Senden ausnutzen.

Da MIMO-Verfahren ausgesprochen phasensensitiv sind, würde eine einfache Mitteilung der Kanalinformation über das OFDM-Symbol (d.h. über der Frequenz) oder den Frequenz-/Zeitabschnitt zu Qualitätseinbußen führen. Bei der Ausführung der Erfindung ist daher eine entsprechende Maximierung der Übertragungskapazität über dem Chunk geboten, die im Ergebnis der Lösung eines Optimierungsproblems als möglich erscheint. Nachfolgend wird gezeigt, dass das Optimierungsproblem konvex ist und somit durch Standardalgorithmen, wie MAXDET oder SEDUMI, gelöst werden kann; vgl. dazu Y. Nesterov und A. Nemirovski, "Interior-Point Polynomial Algorithms in Convex Programming", SIAM, Philadelphia, 1994; und S. Wu, L. Vandenberghe, und S. Boyd, "MAXDET: software for determinant maximization problems", 1996, erhältlich online
http://www.stanford.edu/-boyd/MAXDET.html.

Unten wird auch beschrieben, dass für geringe SNR-Werte ein suboptimales "Chunk Processing" ausreichend ist, da bei geringem SNR mit dem optimalen kapazitätsmaximierenden Verfahren keine signifikanten Kapazitätsgewinne gegenüber dem suboptimalen "Chunk Processing" erzielt werden können.

Das suboptimale "Chunk Processing" zeichnet sich durch eine geringere Rechenkomplexität aus. Man kann sich somit in einem System entweder für eines der beiden Verfahren entscheiden oder vorzugsweise bei einem verein-

4

EP 1 808 989 A1

barten SNR-Schwellwert zwischen den beiden Verfahren umschalten. Umfang und Art der zu signalisierenden Informationen bleiben von der Wahl des Algorithmus beeinflusst.

Die Vorgehensweise lässt sich grundsätzlich auch auf breitbandige Einträgermodulationsverfahren anwenden, bei denen der Breitbandkanal üblicherweise mit W Kanalkoeffizienten beschrieben wird. Auch hier müssen dann statt der sonst üblichen T*R*W komplexen Werte nur rang(H)*T reelle Werte übertragen werden. Es ergeben sich folgende Vorteile:

- Reduzierter Signalisierungsaufwand: Die Anzahl der zurücksignalisierten Werte lässt sich pro Chunk von N*T*R bzw. W*T*R auf T*R bzw. auf rang(H)*T<=T*R und somit um mindestens einen Faktor N bzw. W pro Chunk reduzieren, wenn der Chunk die gesamte Bandbreite B, die in N Unterträger aufgeteilt ist, umfasst. Mit M Chunks pro Bandbreiten B reduziert sich der Signalisierungsaufwand um den Faktor N/M bzw. W/M. Wird die Chunk-Bandbreite nicht deutlich kleiner als die Kohärenzbandbreite gewählt, so gilt W/M > 1. Im Allgemeinen gilt immer N/M>>1. Wird am Empfänger bereits die Sendestrategie berechnet und diese anstelle der Kanalinformation zurücksignalisiert, so müssen nur rang(H)*T reelle Koeffizienten übermittelt werden.

- Chunk-Processing mit maximaler Kapazität pro Chunk: Ausgehend von den individuellen MIMO-Kanälen pro Unterträger, wird empfängerseitig die Sendestrategie für eine Vielzahl an Unterträgern so ausgewählt, dass die Kapazität über dem Chunk maximal wird. Der entsprechende Algorithmus hierfür, wird weiter unten erläutert. Die Chunkbreite lässt sich dabei auch an die Kanaleigenschaften und den Kapazitätsbedarf anpassen.

- Kein Schätzen der Anzahl W der Kanalkoeffizienten erforderlich: Das fehleranfällige Schätzen der Anzahl der Kanalkoeffizienten entfällt.

- SNR-abhängiges Umschalten zwischen einem suboptimalen und optimalen Chunk-Processing zur Reduzierung des Rechenaufwandes ist möglich.

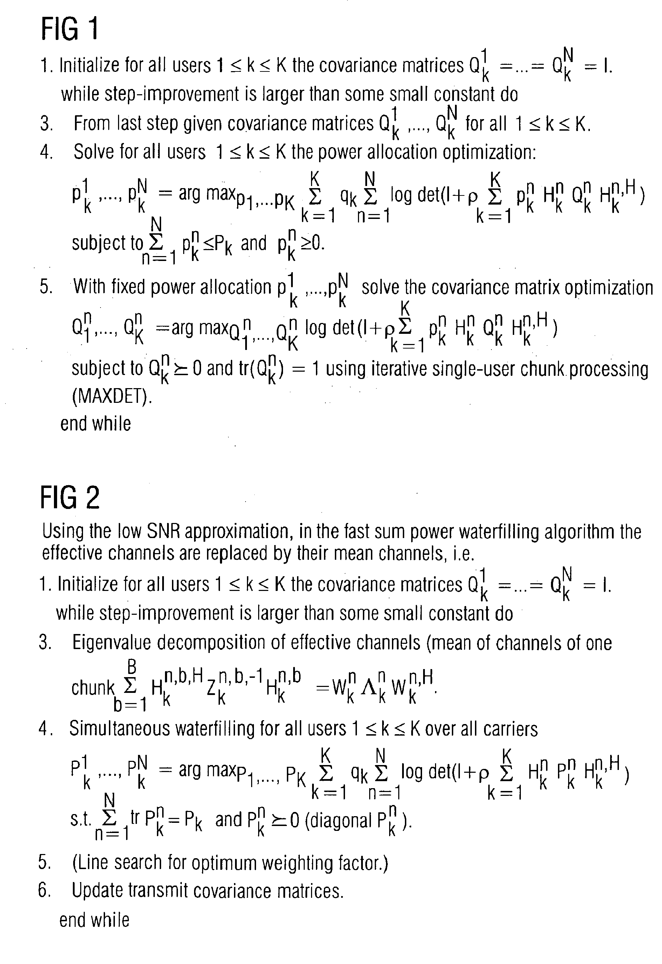

Vorteile und Zweckmäßigkeit der Erfindung ergeben sich im übrigen aus den abhängigen Ansprüchen sowie der nachfolgenden Beschreibung, die sich insbesondere verschiedenen Aspekten der Chunk-Signalverarbeitung widmet, in Verbindung mit den zugehörigen Figuren. Die Figuren 1 und 2 zeigen jeweils einen Algorithmus zur Multi-User-Kapazitätsoptimierung eines Chunk in Ausführungsformen des erfindungsgemäßen Verfahrens.

Die physikalische Kanalstruktur unterteilt die verfügbaren Zeit-/Frequenzressourcen in die erwähnten Frequenz-/Zeitabschnitte oder Chunks, von denen jeder aus einem Satz orthogonaler Funktionen bzw. Wellenformeln besteht. Die Chunks werden zweidimensional betrachtet, und jeder besteht in der Frequenzdomäne aus einer Mehrzahl von Unterträgern und in der Zeitdomäne aus einer Mehrzahl aufeinander folgender OFDM-Symbole. Nachfolgend wird von einer einheitlichen Raum-/Zeitverarbeitung für alle Unterträger und OFDM-Symbole ausgegangen, die zu einem Chunk gehören.

Zuerst soll der Fall eines einzelnen Nutzers (single-user) betrachtet werden, der auf der Annahme beruht, dass die Zeitablaufsteuerung einen Zeit-/Frequenz-Block exklusiv einem Nutzer zuweist. Die spektrale Chunkgröße ist B, und die Kanalmatrizen in einem Block über diese Unterträger sind $H_{11}...$ , $H_B$.

Es ist dann das folgende Problem zu lösen:

$$\max_Q \sum_{b=1}^{B} \log \det(I + \rho H_b Q H_b^H)$$

mit

$$'Q \geq 0, tr(Q) \leq P .$$ (1)

Das Problem besteht darin, eine räumliche MIMO-Signalverarbeitung zu erfinden, die optimal für alle MIMO-Kanäle im Chunk ist. Es ist zu beachten, dass im Allgemeinen gilt: $H_b \# H_c$. Die Zielfunktion besteht darin, die gegenseitige Information bezüglich dieses Chunk zu maximieren und es gibt auch weitere Zielfunktionen, beispielsweise Normierte-Summen-MSE oder Fehlerraten, die in diesem Programmierungs-Ansatz implementiert werden können.

Das Optimierungsproblem (1) ist ein konvexes Optimierungsproblem, d.h. die Zielfunktion ist in der Sende-Kovarianzmatrix Q konkav. Sind die Randbedingungen erfüllt, nämlich die positive Semidefinitheit und die Spur-Randbedingungen, so stammen die zulässigen Sende-Kovarianzmatrizen Q aus einer konvexen Menge. Allgemein können konvexe Optimierungsprobleme effizient mittels Innenpunkt-Verfahren auf Polynom-Basis mit jeder gewünschten Genauigkeit gelöst werden; vgl. dazu NESTEROV (zit. weiter oben). Zudem wurde speziell für die Optimierung von Determinanten durch WU et al. (zit. weiter oben) ein konvexes Optimierungswerkzeug namens MAXDET vorgeschlagen. Das obige Problem kann in Standard-Maxdet-Form ausgedrückt werden.

Jedoch hat das Optimierungsproblem keine Lösung in geschlossener Form. Bis heute können weder die optimalen Senderichtungen noch die optimalen Leistungs-Zuordnungen in geschlossener Form abgeleitet werden.

Die notwendigen und hinreichenden Karush-Kuhn-Tucker (KKT)-Optimierungsbedingungen für das Problem (1) sind gegeben durch

$$\sum_{b=1}^{B} H_b^H [I + \rho H_b Q H_b^H]^{-1} H_b = \mu I - \Psi$$

und

$$Q \le 0, tr(Q) \le P, \mu \ge 0, \Psi \ge 0, tr(\Psi Q) = 0, \mu[tr(Q) - P] = 0 \tag{2}$$

vgl. S. Boyd und L. Vandenberghe, "Convex optimization", Cambridge University Press, 2004.

Die KKT-Bedingung in (2) charakterisiert die optimale Sende-Kovarianzmatrix, d.h. die optimale Sende-Kovarianzmatrix Q muss die in (2) gegebenen KKTt-Bedingungen erfüllen, und umgekehrt: Wenn eine bestimmte Matrix Q die Bedingungen in (2) erfüllt, dann ist diese Matrix Q optimal.

Für kleine SNR-Werte kann die optimale Strategie in geschlossener Form aus der folgenden Transformationsgleichung abgeleitet werden:

$$\sum_{b=1}^{B} \log \det(I + \rho H_b Q H_b^H) = tr \log \prod_{b=1}^{B} [I + \rho H_b Q H_b^H] \tag{3}$$

Für kleine SNR-Werte kann die obige Gleichung approximiert werden durch

$$tr \log \prod_{b=1}^{B} [I + \rho H_b Q H_b^H]_{\rho=1} \approx tr \log[I + \rho \sum_{b=1}^{B} H_b Q H_b^H] \tag{4}$$

Die rechte Seite dieser Näherungsgleichung ist leicht aufgrund des nachfolgenden Maximierungsproblems mit der effektiven Kanalmatrix $\widetilde{H} = \sum_{b=1}^{B} H_b$ zu lösen:

$$\max_{Q} \log \det[I + \widetilde{H} Q \widetilde{H}^H] \quad \text{mit} \quad Q \ge 0, tr[Q] \le P \tag{5}$$

Dies ist das Standardproblem bei einem Ein-Träger-Ein-Nutzer-MIMO mit vollständiger Kanalzustandsinformation (CSI) am Sender. Die Lösung ist durch die sogenannte "waterfilling power allocation" gegeben, und die optimalen Senderichtungen entsprechen den rechten Eigenvektoren der effektiven Kanalmatrix; vgl. E. Telatar, "Capacity of Multi-antenna Gaussian Channels", European Transactions on Telecommunications, vol. 10, pp. 585-595, 1999. Außerdem reduziert sich für kleine SNR-Werte das Optimierungsproblem (5) auf den bekannten Waterfilling-Algorithmus.

Für große SNR-Werte konvergiert die optimale Sendestrategie auf gleichmäßige Leistungs-Zuordnung, d.h.

$$Q = \frac{P}{\pi_T} \mathrm{I}.$$

Es ist zu beachten, dass beide Chunkverarbeitungs-Ansätze mit einer spektralen Leistungszuordnung kombiniert sind, d.h. die Sendeleistung des Nutzers wird zur Kapazitätsmaximierung über die Chunks verteilt. Diese Leistungszuordnung nimmt die Form eines einfachen Waterfilling über die Chunks an, da diese infolge der OFDM-Übertragung orthogonal sind.

Es gibt offensichtlich ein Priorisierungserfordernis zwischen dem Rückmeldungs-Overhead, der Komplexität der Signalverarbeitung und der Performance. Hier hängt viel von der spektralen Chunkgröße ab. Es können zwei Strategien zur Adaption der Chunkgröße betrachtet werden.

Bei der ersten Strategie ist die Chunkgröße für ein bestimmtes Anwendungs-Szenarium Fixpunkt. Die Chunkgröße wird für das entsprechende Kanalmodell, welches für das Anwendungs-Szenarium am besten passt, errechnet. Die Kohärenzbandbreite und die Kohärenzzeit sind hierbei Eckpfeiler für die Wahl der festen Chunkgröße.

Die andere Strategie besteht darin, die Chunkgröße an den Kurzzeit- oder Langzeit-CSI anzupassen. Es ist angenommen, dass die Systemsteuerung die momentanen Kanalbedingungen perfekt kennt. Daher kann sie den momentanen Kapazitätsverlust in Folge einer bestimmten Chunkgröße berechnen. Dies kann effizient durch einen Lookup-Table realisiert werden, der die Verluste als Funktion der Anzahl von Taps, des Power-Delay-Profils und des SNR enthält. Aufgrund dieser momentanen Kanalzustandsinformation entscheidet die Steuerung auch, ob die optimale oder suboptimale Kovarianzmatrix-Optimierung (mit kleinem oder großem SNR) zu wählen ist. Im Multi-User-Fall können verschiedene Chunkgrößen verschiedenen Nutzern zugeordnet werden. Der Delay-Spread der Kanal-Realisierungen der verschiedenen Nutzer führt zu verschiedenen Chunkgrößen, die genutzt werden können.

Um die korrekte Einordnung der Single-User-Ergebnisse in eine Multi-User-Kapazitätsoptimierung zu finden, sind die verschiedenen Freiheitsgrade bei den Single-User- und Multi-User-Mehrantennensystemen zu verstehen. Zusätzlich zur räumlichen Signalverarbeitung und spektralen Leistungszuordnung wird eine Multi-User-Diversität genutzt, indem mehrere Nutzer über Raum, Frequenz und Zeit eingeplant werden.

Daher ist auch der Einfluss der Chunk-Verarbeitung auf die Summen-Kapazität durch den Multi-User-Diversitätsverlust bestimmt. Die Multi-User-Diversitätsausbeute (mitunter auch bezeichnet als Planungs-Ausbeute) steigt mit abnehmender spektraler Chunkgröße). Im Ein-Antennen-FDMA-Fall wurden numerische Ergebnisse hierfür in S. Olonbayar und H. Rohling, "Multiuser Diversity and Subcarrier Allocation in OFDM-FDMA Systems", Proc. Of OFDM Workshop 2005 bereitgestellt.

Im Mehrantennen-Fall ist die FDMA suboptimal, und die Planungseinheit wird mehrere Nutzer gleichzeitig auf dem selben Träger einplanen. Ein entsprechender optimaler Planungsalgorithmus, wie er in H. Boche und E.A. Jorswieck, "Sum Capacity Optimization of the MIMO Gaussian MAC", Proc. WPMC 2002, invited paper; und H. Boche und M. Wiczanowski, "Stability-Optimal Transmission Policy for Multiple Antenna Multiple Access Channel in the Geometric View", will appear in EURASIP Signal Processing Journal, Special Issue on Advances in Signal Processing-assisted Cross-layer Designs, 2006 vorgeschlagen wird, ist für die Chunk-Verarbeitung anzupassen.

Fig. 1 zeigt einen Algorithmus zur Kapazitätsoptimierung für mehrere Nutzer auf einem Chunk (Multi-User-Fall). Wenn die Summen-Kapazität zu maximieren ist, sind die Gewichtsfaktoren $q_1$, ... $q_K$ in Zeile 4 gleich Eins. Im Algorithmus ist zu beobachten, dass die Multi-User-Optimierung in eine Iterative-Signal-User-Verarbeitung zerfällt, wie sie oben beschrieben ist. Die zusätzliche Leistungs-Zuordnung über die Nutzer und über die Unterträger ist ähnlich dem oben erwähnten räumlichen Waterfilling. Es kann gezeigt werden, dass der Algorithmus auf eine globale optimale Lösung konvergiert.

In N. Jindal, W. Rhee, S. Vishwanath, S. Jafar, A. Goldsmith, "Sum Power Iterative Water-Filling for Multi-Antenna Gaussian Broadcast Channels", IEEE Trans. on Information Theory, vol. 51, no. 4, 2005; und R. Böhnke, V. Kühn, K. Kammeyer, "Fast sum rate maximization for the downlink of MIMO-OFDM systems", Proc. Canadian Workshop on Information Theory, 2005, wurde kürzlich die Nutzung eines schnellen Optimierungsalgorithmus vorgeschlagen. Um diesen Algorithmus für den Fall zu nutzen, dass spektrale Chunks zu verarbeiten sind, hat die Sendestrategie die effektiven Kanäle für alle Nutzer zu diagonalisieren. Dann kann ein gleichzeitiges Waterfilling über alle Träger und alle Nutzer ausgeführt werden. Dieser Ansatz ist in Fig. 2 dargestellt.

Die Ausführung der Erfindung ist nicht auf die oben erläuterten bevorzugten Ausführungsformen und Ausprägungen der erläuterten Algorithmen beschränkt, sondern ebenso in einer Vielzahl von Abwandlungen möglich, die im Rahmen fachgemäßen Handeln liegen. Insbesondere sollen beliebige Kombinationen der Merkmale der abhängigen Ansprüche als zum Schutzbereich der Erfindung gehörig betrachtet werden.

**Patentansprüche**

1. Verfahren zur digitalen drahtlosen Nachrichtenübertragung über einen breitbandigen Mobilfunkkanal unter Einsatz eines OFDM-Mehrträger-Modulationsverfahrens mit M Unterträgern in einem Frequenzabschnitt des Mobilfunkkanals und mehreren Symbolen in einem Zeitabschnitt sowie unter Einsatz eines MIMO-Mehrantennenverfahrens mit T Sendeantennen und R Empfangsantennen,
   **dadurch gekennzeichnet, dass**
   für alle Unterträger und Symbole eine einzige vorbestimmte, kanalangepasste Sendestrategie verwendet wird, die unabhängig von der Spezifik des MIMO-Mehrantennenverfahrens und unabhängig von der Größe des Frequenz-/Zeitabschnitts signalisierungsseitig durch maximal T * R komplexe Werte beschrieben wird.

2. Verfahren nach Anspruch 1,
   **dadurch gekennzeichnet, dass**
   eine MIMO-Signalverarbeitung gemeinsam über alle N Unterträger durchgeführt wird.

3. Verfahren nach Anspruch 1 oder 2,
   **dadurch gekennzeichnet, dass**
   die Sendestrategie zur Maximierung der Übertragungskapazität über dem Frequenz-/Zeitabschnitt ausgewählt wird.

4. Verfahren nach einem der vorangehenden Ansprüche,
   **dadurch gekennzeichnet, dass**
   die Breite des Frequenz-/Zeitabschnitts über der Frequenz in Abhängigkeit von vorbestimmten Kanaleigenschaften und zur Erreichung einer vorgegebenen Kapazität festgelegt wird.

5. Verfahren nach einem der Ansprüche 1 bis 3,
   **dadurch gekennzeichnet, dass**
   die Breite des Frequenz-/Zeitabschnitts über der Frequenz in Abhängigkeit von vorgegebenen Kanaleigenschaften und zur Unterschreitung eines vorgegebenen Signalisierungsaufwandes festgelegt wird.

6. Verfahren nach einem der vorangehenden Ansprüche,
   **dadurch gekennzeichnet, dass**
   die Breite des Frequenz-/Zeitabschnitts über der Frequenz gemäß einem vorbestimmten Algorithmus mit voreingestellter Schrittbreite variiert wird.

7. Verfahren nach einem der Ansprüche 4 bis 6,
   **dadurch gekennzeichnet, dass**
   die Breite des Frequenz-/Zeitabschnitts an mittlere Kanalparameter, insbesondere eine Kohärenzbandbreite und Kohärenzzeit, angepasst wird.

8. Verfahren nach einem der vorangehenden Ansprüche,
   **dadurch gekennzeichnet, dass**
   eine Signalisierung der Sendestrategie nur im Ansprechen auf eine zeitliche Änderung des Mobilfunkkanals ausgeführt wird.

9. Verfahren nach einem der vorangehenden Ansprüche,
   **dadurch gekennzeichnet, dass**
   ein Empfänger Kanalinformation zurücksignalisiert, von der eine Sendestrategie abgeleitet werden kann, wobei pro Kanal maximal T * R komplexe Werte übermittelt werden.

10. Verfahren nach einem der Ansprüche 1 bis 8,
    **dadurch gekennzeichnet, dass**
    ein Empfänger Kanalinformation zurücksignalisiert, von der eine Sendestrategie abgeleitet werden kann, wobei abhängig vom Rang der Kanalmatrix rang(H) pro Kanal rang(H)*T komplexe Werte übermittelt werden.

11. Verfahren nach einem der Ansprüche 1 bis 8,
    **dadurch gekennzeichnet, dass**
    ein Empfänger die Sendestrategie berechnet und diese anstelle einer Kanalinformation zum Sender zurücksignalisiert wird, wobei abhängig vom Rang der Kanalmatrix rang(H) pro Kanal rang(H)$^{*}$T reelle Werte übermittelt werden.

# FIG 1

1. Initialize for all users $1 \leq k \leq K$ the covariance matrices $Q_k^1 = ... = Q_k^N = I$.

   while step-improvement is larger than some small constant do

3. From last step given covariance matrices $Q_k^1, ..., Q_k^N$ for all $1 \leq k \leq K$.

4. Solve for all users $1 \leq k \leq K$ the power allocation optimization:

$$p_k^1, ..., p_k^N = \arg \max_{p_1,...p_K} \sum_{k=1}^{K} q_k \sum_{n=1}^{N} \log \det(I + \rho \sum_{k=1}^{K} p_k^n H_k^n Q_k^n H_k^{n,H})$$

   subject to $\sum_{n=1}^{N} p_k^n \leq P_k$ and $p_k^n \geq 0$.

5. With fixed power allocation $p_k^1, ..., p_k^N$ solve the covariance matrix optimization

$$Q_1^n, ..., Q_K^n = \arg \max_{Q_1^n, ..., Q_K^n} \log \det(I + \rho \sum_{k=1}^{K} p_k^n H_k^n Q_k^n H_k^{n,H})$$

   subject to $Q_k^n \succeq 0$ and $tr(Q_k^n) = 1$ using iterative single-user chunk processing (MAXDET).

   end while

# FIG 2

Using the low SNR approximation, in the fast sum power waterfilling algorithm the effective channels are replaced by their mean channels, i.e.

1. Initialize for all users $1 \leq k \leq K$ the covariance matrices $Q_k^1 = ... = Q_k^N = I$.

   while step-improvement is larger than some small constant do

3. Eigenvalue decomposition of effective channels (mean of channels of one

$$\text{chunk} \sum_{b=1}^{B} H_k^{n,b,H} Z_k^{n,b,-1} H_k^{n,b} = W_k^n \Lambda_k^n W_k^{n,H}.$$

4. Simultaneous waterfilling for all users $1 \leq k \leq K$ over all carriers

$$P_k^1, ..., P_k^N = \arg \max_{P_1,..., P_K} \sum_{k=1}^{K} q_k \sum_{n=1}^{N} \log \det(I + \rho \sum_{k=1}^{K} H_k^n P_k^n H_k^{n,H})$$

   s.t. $\sum_{n=1}^{N} tr\, P_k^n = P_k$ and $P_k^n \succeq 0$ (diagonal $P_k^n$).

5. (Line search for optimum weighting factor.)

6. Update transmit covariance matrices.

   end while

**Europäisches Patentamt**

# EUROPÄISCHER RECHERCHENBERICHT

Nummer der Anmeldung

EP 06 00 0638

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2005/047515 A1 (WALTON J. RODNEY ET AL) 3. März 2005 (2005-03-03) <br> * Absatz [0008] * <br> * Absatz [0173] - Absatz [0177] * <br> * Absatz [0186] - Absatz [0187] * <br> * Absatz [0192] * <br> ----- | 1-11 | INV. <br> H04L27/26 <br> H04B7/04 |
| A | E. DAHLMAN ET AL.: "A framework for future radio access" <br> 61ST IEEE VEHICULAR TECHNOLOGY CONFERENCE, VTC 2005-SPRING, 30 MAY - 1 JUNE 2005, STOCKHOLM, SWEDEN, <br> Bd. 5, 30. Mai 2005 (2005-05-30), Seiten 2944-2948, XP002384508 <br> Piscataway, USA <br> * Seite 2945, rechte Spalte, Absatz 1 - Absatz 4 * <br> * Abbildung 2 * <br> ----- | 1-11 | |
| A | D. GESBERT ET AL.: "From theory to practice: an overview of MIMO space-time coded wireless systems" <br> IEEE JOURNAL ON SELECTED AREAS IN COMMUNICATIONS, <br> Bd. 21, Nr. 3, April 2003 (2003-04), Seiten 281-302, XP002384509 <br> * Seite 284, linke Spalte, Absatz 2 * <br> ----- | 1-11 | RECHERCHIERTE SACHGEBIETE (IPC) <br> H04L <br> H04B |

Der vorliegende Recherchenbericht wurde für alle Patentansprüche erstellt

| Recherchenort | Abschlußdatum der Recherche | Prüfer |
|---|---|---|
| Den Haag | 8. Juni 2006 | Orozco Roura, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 06 00 0638

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-06-2006

| Im Recherchenbericht angeführtes Patentdokument | Datum der Veröffentlichung | Mitglied(er) der Patentfamilie | | Datum der Veröffentlichung |
|---|---|---|---|---|
| US 2005047515 A1 | 03-03-2005 | CA | 2536425 A1 | 10-03-2005 |
| | | WO | 2005022817 A1 | 10-03-2005 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **Y. NESTEROV ; A. NEMIROVSKI.** Interior-Point Polynomial Algorithms in Convex Programming. *SIAM,* 1994
- **S. WU ; L. VANDENBERGHE ; S. BOYD.** *MAXDET: software for determinant maximization problems,* 1996
- **S. BOYD ; L. VANDENBERGHE.** Convex optimization. Cambridge University Press, 2004
- **E. TELATAR.** Capacity of Multi-antenna Gaussian Channels. *European Transactions on Telecommunications,* 1999, vol. 10, 585-595
- **S. OLONBAYAR ; H. ROHLING.** Multiuser Diversity and Subcarrier Allocation in OFDM-FDMA Systems. *Proc. Of OFDM Workshop,* 2005
- **H. BOCHE ; E.A. JORSWIECK.** Sum Capacity Optimization of the MIMO Gaussian MAC. *Proc. WPMC,* 2002

- **H. BOCHE ; M. WICZANOWSKI.** Stability-Optimal Transmission Policy for Multiple Antenna Multiple Access Channel in the Geometric View. *EURASIP Signal Processing Journal, Special Issue on Advances in Signal Processing-assisted Cross-layer Designs,* 2006
- **N. JINDAL ; W. RHEE ; S. VISHWANATH ; S. JAFAR ; A. GOLDSMITH.** Sum Power Iterative Water-Filling for Multi-Antenna Gaussian Broadcast Channels. *IEEE Trans. on Information Theory,* 2005, vol. 51 (4
- **R. BÖHNKE ; V. KÜHN ; K. KAMMEYER.** Fast sum rate maximization for the downlink of MIMO-OFDM systems. *Proc. Canadian Workshop on Information Theory,* 2005